# EUROPEAN PATENT SPECIFICATION

(11) **EP 1 556 913 B1**
(45) Date of publication and mention of the grant of the patent: **02.01.2008**
(21) Application number: 03772531.4
(22) Date of filing: 27.10.2003
(51) Int. Cl.: H01M 2/36, H01M 10/48, H01M 10/42

(54) **ELECTRIC BATTERY HAVING AUTONOMOUS WATERING AND ACID MIXING SYSTEMS**
ELEKTRISCHE BATTERIE MIT AUTONOMEN NACHFÜLLUNGS- UND SÄUREMISCHSYSTEMEN
BATTERIE ELECTRIQUE A SYSTEMES D'ALIMENTATION EN EAU ET DE MELANGE D'ACIDES AUTONOMES

(30) Priority: 25.10.2002 US 421433 P
(43) Date of publication of application: 27.07.2005
(73) Proprietor: Jones, William E. M., 40475 Freeport (BS)
(72) Inventor: Jones, William E. M., 40475 Freeport (BS)
(74) Representative: Callies, Rainer Michael
(86) International application number: PCT/IB2003/005380
(87) International publication number: WO 2004/038821

(56) References cited:
- EP-A- 0 746 046
- WO-A-03/090306
- GB-A- 2 333 888
- US-A- 4 221 847
- US-A- 5 543 243
- US-A- 5 615 717
- US-B1- 6 213 145
- US-B1- 6 261 714
- US-B1- 6 338 368
- CHEMICAL ABSTRACTS + INDEXES, AMERICAN CHEMICAL SOCIETY. COLUMBUS, US, 6 May 1991 (1991-05-06), XP000253126 ISSN: 0009-2258

## Description

### Field of the Invention

The invention concerns electric batteries having aqueous electrolytes and systems for automatically replenishing water to the battery.

### Background of the Invention

Electrical batteries that have aqueous electrolytes and see heavy duty industrial use, such as lead-acid batteries powering fork-lift trucks, consume water during charging and, therefore, require periodic replenishing of the water constituent of the electrolyte in each of the battery's cells.

Watering of the cells in a battery may be performed manually; a technician visually inspects the water level in each cell of a battery and adds water to any cells which show a low level of electrolyte. For large batteries with many cells, this can be a tedious, error prone process, thus, single point watering systems were developed. Single point watering systems may comprise, for example, simple float valves positioned in each cell, the cells being linked together by a common water supply tube which feeds water to the cells through the float valves. When watering is required, the water supply tube is connected to a water reservoir, water flows from the reservoir to the cells and the float valves close to cut off the flow of water once their respective cells are filled. Watering systems having increased automation have evolved using automatic controls thereby allowing a technician simply to connect the watering system to a battery and leave the system unattended. In such automatic systems, the equipment and controls necessary for automatic watering are usually integrated with a specially designed battery charger. This configuration is disadvantageous because the batteries must now depend on a specific charger for automatic watering. Thus, to obtain an automatic watering system one must purchase a new charger which represents a significant capital expenditure.

When a lead-acid battery is discharged, its acid electrolyte will become depleted as the plates in the cells become sulfated and water is formed within the cells by the chemical reactions associated with discharge. On recharge, concentrated acid is released back from the plates and, having a higher specific gravity than the water, sinks to the bottom of the cells. This concentrated acid, if permitted to remain stratified, can damage the bottoms of the plates. It is recognized as desirable, therefore, to have some method for mixing the acid with the water in the cells during the charging to prevent acid stratification.

One method of preventing acid stratification is known as "air mixing". In this method, air is pumped during charging into each cell through tubes, each having an outlet in the lower regions of the cells. The air pumped into each cell forms bubbles which rise and thereby mix the electrolyte with little loss of water compared with overcharging the cells. In the past, to effect automatic air mixing during charging, an air pump and a control system have been mounted in or on the battery charger. The air pump, under control of the control system, delivers air to the battery cells via a tubing system which distributes the air to each cell at the appropriate time during charging. The automatic air mixing system is associated with the charger, thus, leading to a similar disadvantage for the automatic mixing system as experienced with the automatic watering system.

There is dearly a need for automatic watering which is associated with the electric battery and not with the battery charger, thus, making routine servicing of the battery independent of the type of charger being used.

### Summary and Objects of the Invention

The invention concerns an electric battery having an autonomous watering system, according to claim 1. The battery comprises a plurality of aqueous electrolyte cells and is connectable to a water source for replenishing water in the cells. The battery includes a conduit fixed to the battery which is connectable to the water source for receiving water therefrom, and which preferably includes a coupling for easy connection to the water source. The conduit is also in fluid communication with each of the cells. A valve system associated with the conduit and cells controls the flow of water to the cells.

Further embodiments of the electric battery according to the invention are stated in the claims 2 to 12.

in one embodiment, the valve system comprises a conduit valve positioned in the conduit between the coupling and the cells for controlling fluid flow therebetween. A respective cell valve is positioned between the conduit and each of the cells for controlling fluid flow from the conduit into each of the cells. An electrolyte level sensor, capable of generating signals indicative of the amount of electrolyte present, is positioned in at least one of the cells. The one cell having the electrolyte level sensor is representative of all-of the battery cells. A controller is mounted in or on the battery, the controller being in communication with the electrolyte level sensor and the conduit valve. The controller opens the conduit valve in response to the signals from the electrolyte level sensor Indicative of a deficient amount of electrolyte in the cell. Water flows through the conduit to each of the cells. As each cell fills with water to the desired level, each respective cell valve closes, stopping flow of water to the cell. Preferably, the controller is programmed to delay closing the conduit valve for a predetermined period of time. This ensures that all of the cells receive the necessary water. The controller is also preferably programmed to delay opening of the conduit valve until the voltage in the cells reaches a predetermined value during charging, for example, a voltage which correlates with the maximum acid level in the cells caused by gas bubbles accumulated in the cells as a result of charging. This method, which is already in general use with conventional, charger-based watering systems, will help prevent the cells from being overfilled during watering.

In another embodiment, the coupling which engages the fitting from the water source has an automatic disengage feature. The automatic disengage feature comprises a biasing member positioned between the coupling and the fitting for ejecting the fitting away from and out of engagement with the coupling, and a latch movable between a first position engaging and holding the fitting in engagement with the coupling against the biasing member, and a second position releasing the fitting from engagement with the coupling. The latch is actuated between the first and second positions by the controller thereby permitting automatic disconnect of the fitting from the coupling.

In another embodiment, the battery according to the invention has, in addition to a watering system, an air mixing system. The air mixing system includes a charging sensor capable of generating a signal indicating when the battery is being charged. The charging sensor may be an algorithm on the controller or a distinct physical sensor in or on the battery. The charging sensor is in communication with the controller. An air pump is mounted in or on the battery and is in fluid communication with an air conduit in fluid communication with each cell. The air conduit is separate from the aforementioned water conduit for watering the cells but the two systems preferably share the same electronic controller.

The controller activates the air pump in response to signals from the charging sensor indicating that the battery is being charged, the air pump pumping air into the cells to promote mixing of the electrolyte and, thereby, prevent acid stratification during charging.

Other embodiments of the battery comprise a plurality of air pumps in fluid communication with the conduit, the controller being in communication with all of the air pumps and activating them during charging of the battery, the air pumps pumping air into the cells to promote mixing of the electrolyte and, thereby, prevent acid stratification during charging.

When multiple pumps are present, they can be dedicated to pump air into different groups of cells. Such a battery comprises a plurality of first cells holding the electrolyte, a first air pump and a first conduit in fluid communication with the first air pump. The first conduit is in fluid communication with each of the first cells. The battery also has a plurality of second cells holding the electrolyte, a second air pump and a second conduit in fluid communication with the second air pump. The second conduit is in fluid communication with each of the second cells. The battery also has a sensor capable of generating signals indicating when the battery is being charged. A controller mounted in or on the battery is in communication with the sensor and the first and second air pumps, the controller activating the air pumps in response to the signals from the sensor indicating that the battery is being charged, the air pump pumping air into the first and second cells to promote mixing of the electrolyte and, thereby, prevent acid stratification during charging.

A bridge conduit may also be mounted on the battery to provide fluid communication between the first and the second conduits. The bridge conduit allows one of the first and second pumps to pump air into both of the first and the second cells during charging of the battery, thereby providing redundancy in the event of an air pump failure.

For multiple pump embodiments, the controller may also include a pump sensor capable of generating a signal indicating failure of any of the pumps and an alarm in communication with the controller, the alarm being responsive to the pump sensor signal and adapted to generate an alarm signal indicative of the failure.

In all of the embodiments, it is preferred that the battery have a cover positioned over the electronic and electrical components on the battery including the controller, the conduit valve, the cell valves and the air pump or pumps. The cover is preferably locked or bolted down on the battery to restrict access to the components and prevent damage to them. A steel cover is preferred to contain any hydrogen explosion.

The invention further encompasses a method of replenishing water to cells of an electric battery having an aqueous electrolyte, according to claim 13. The method comprises the steps of:
(A) connecting the battery to a water source;
(B) sensing when the electrolyte in the battery is low;
(C) allowing water to flow from the water source to the cells through a conduit fixed to the battery;
(D) sensing when said electrolyte in said battery is adequate; and
(E) halting flow of said water to said cells.

It is an object of the invention to provide a battery having an automatic watering system independent of the battery's charger.

It is another object of the invention to provide a battery having both automatic watering and air mixing systems as part of the battery, preferably with a common controller.

It is yet another object of the invention to provide a battery having multiple air pumps as part of the air mixing system.

It is again another object of the invention to provide a battery wherein the multiple air pumps pump air into different cells.

It is yet again another object of the invention to provide a battery wherein the multiple air pumps are interconnected so as to provide redundancy and be able to pump air into several groups of cells.

It is still another object of the invention to provide a method of air mixing a battery electrolyte during charging using multiple air pumps such that a pump failure is signaled and the remaining pumps are operated at increased throughput or for a longer duration so as to compensate for the reduced air flow caused by the failure of one or more pumps.

These and other objects and advantages of the invention will become apparent upon consideration of the drawings and detailed description of preferred embodiments of the invention.

### Brief Description of the Drawings

Figure 1 is a schematic representation of an autonomous battery according to the invention;
Figure 2 is a schematic representation of another embodiment of an autonomous battery utilizing multiple pumps;
Figure 3 is a schematic representation of still another embodiment of an autonomous battery with redundant pumps;
Figure 4 is a perspective view of an autonomous battery according to the invention.

### Detailed Description of the Preferred Embodiments

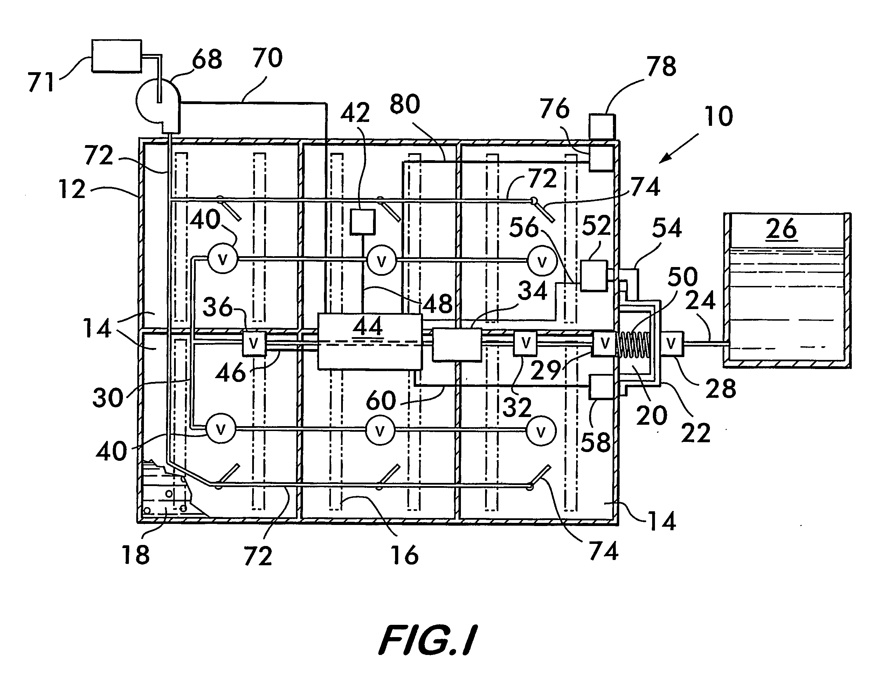

Figure 1 is a schematic view of an electric battery 10 according to the invention. Battery 10 comprises a casing 12 divided into a plurality of cells 14, the cells housing battery plates 16 immersed in a liquid electrolyte solution 18. By way of example, battery 10 is a lead-acid battery because such batteries require water replenishment and suffer from acid stratification upon charging, and both of these aspects are addressed by the invention. It is understood, however, that the invention is not limited for use only with lead-acid batteries.

### Autonomous Watering System

Figure 1 illustrates a battery 10 according to the invention having an autonomous watering system. Battery 10 has a coupling 20 preferably mounted on its casing 12, the coupling 20 being compatible with a fitting 22 coupled to a hose 24 in fluid communication with a water source in the form of a reservoir 26. To replenish the cells 14 with water, fitting 22 is engaged with coupling 20, thereby linking the reservoir 26 to the battery 10. Fitting 22 preferably includes a shut-off valve 28 that opens when the fitting 22 is engaged with coupling 20, the valve being otherwise closed and preventing water flow from reservoir 26. To prevent back flow of water out of battery 10 when the fitting 22 and coupling 20 are disengaged, the coupling may be equipped with a similar shut-off valve 29 which is normally closed but opens upon engagement of the fitting and coupling. Such valve combinations are known as water stop valves that are closed when the couplings of which they are a part are not engaged, but which open upon mutual engagement of the couplings.

Coupling 20 is in fluid communication with a conduit 30 mounted in or on the battery 10. In lieu of a water stop valve 29 in coupling 20, conduit 30 may have a check valve 32 downstream of coupling 20 to prevent back flow of water through the coupling. Conduit 30 also has a filter 34 to remove particulate matter from the water flowing through it.

A valve system is operatively associated with conduit 30 for controlling the flow of water from reservoir 26 through the conduit and to the cells 14. In the preferred embodiment shown in Figure 1, the valve system comprises an electrically operated conduit valve 36, preferably a solenoid valve powered by the battery 10 and positioned in conduit 30 to control the flow of water from the reservoir to the cells 14. Downstream of the conduit valve 36 the conduit 30 is in fluid communication with each of the cells 14. Each cell 14 has a cell valve 40 that controls the flow of water from conduit 30 to the particular cell 14 with which it is associated. For the battery embodiment 10 having the conduit valve 36 as shown in Figure 1, cell valves 40 preferably comprise valves having a valve closing member responsive to the level of fluid in the cell to effect opening and closing of the valve. Automatically closing mechanical valves, such as float valves or injector valves, are an example of such valves.

At least one cell 14 has an electrolyte level sensor 42 adapted for sensing the amount of electrolyte in the cell and generating a signal indicative of that amount. The one cell is representative of all of the cells in the battery and serves as an indicator of the electrolyte level in the battery. Electrolyte sensor 42 is preferably powered by the battery 10, may be of any practical design and could, for example, be similar to the sensors disclosed in U.S. Patent No. 5,936,382 which is hereby incorporated by reference herein.

A controller 44 is mounted on or in battery 10. Controller 44 may comprise a group of discrete electronic, electro-mechanical and/or mechanical components and/or an integrated circuit such as a microprocessor. The controller 44 is preferably powered by the battery 10 itself and is capable of executing pre-programmed or hard-wired algorithms and/or has resident software providing programmed algorithms controlling the operation of the battery watering function. Controller 44 is in communication with conduit valve 36 and electrolyte sensor 42 over respective communication links 46 and 48. Controller 44 controls the opening and closing of conduit valve 36 in response to signals from the electrolyte level sensor 42 as described below.

As battery 10 is alternately charged and discharged during its working life, water is depleted from the cells. The water must be periodically replenished. This is done substantially automatically by a technician engaging fitting 22 with coupling 20 on the battery 10. Engagement of the fitting with the coupling opens the water stop valves 28 and 29 in fitting 22 and coupling 20, allowing water to flow through coupling 20 and into conduit 30, passing though check valve 32 (if present) and filter 34 to conduit valve 36. Conduit valve 36 is preferably normally closed. If the electrolyte level is low, electrolyte level sensor 42 generates a signal indicative of this condition and the signal is relayed over communication link 48 to controller 44. Controller 44 then uses communication link 46 to open conduit valve 36. Water flows through the conduit valve 36 to the cells 14 through the remainder of conduit 30.

In this example embodiment, cell valves 40, which regulate flow to each cell 14, comprise automatically closing mechanical valves such as float valves. Mechanical valves are advantageous because their operation depends directly upon the electrolyte level within the cells. Thus, each cell 14 that requires electrolyte will have an open valve 40, and water will be allowed to flow into each cell 14 with a low electrolyte condition. One advantage to the valve system comprising the conduit valve 36 and mechanical valves 40 is that it can handle a battery wherein different cells consume water at different rates without the need for direct control of the cell valves. As each cell 14 is topped off, its mechanical valve 40 automatically closes, and water flow ceases to the cell. To ensure that all of the cells 14 receive adequate water, the controller 44 can delay closing the conduit valve 36 for a predetermined period of time (e.g., a few minutes). The fitting 22 may then be decoupled from coupling 20.

It may be desirable to have the coupling 20 disengage itself automatically from fitting 22 at the completion of the watering process. This is accomplished by providing a biasing member 50 positioned between the coupling 20 and fitting 22 for biasing the fitting away from the coupling, and a latch 52 for temporarily holding the fitting in engagement with the coupling against the force of the biasing member. Biasing member 50 is preferably a spring, and latch 52 preferably comprises a solenoid actuated dog 54 powered by the battery 10 and movable between a first position engaging and holding the fitting 22 in engagement with the coupling 20 against the biasing force of biasing member 50, and a second position disengaged from fitting 22, thereby allowing biasing member 50 to eject the fitting 22 from engagement with the coupling 20. Latch 52 is under the control of controller 44 and communicates with it through a communication link 56. A fitting sensor 58 is preferably positioned proximate to coupling 20. Fitting sensor 58 may, for example, be a limit switch coupled to controller 44 by a communication link 60. Engagement of fitting 22 with coupling 20 is sensed by the fitting sensor 58 and signaled to the controller over link 60. The controller 44 moves the latch 52 into the first position holding the fitting 22 to the coupling 20. After completion of battery watering, as signaled to the controller 44 by the electrolyte level sensor 42, the controller 44 moves the latch to the second position releasing fitting 22. Biasing member 50 pushes the fitting 22 away from coupling 20, disengaging the fitting from the coupling and, thus, providing a positive and visible signal that battery watering is complete. Automatic ejection of the fitting 22 from coupling 20 provides the added advantage of preventing damage to the fitting 22, coupling 20 and battery casing 12 which occurs when technicians, upon completion of watering, move the battery away from the reservoir 26 while hose 24 is still attached.

### Autonomous Air Mixing System

Battery 10, shown in Figure 1, also comprises an autonomous air mixing system. The air mixing system is applicable to lead-acid type batteries that are subject to acid stratification during charging.

The air mixing system according to the invention comprises an air pump 68 mounted in or on the battery 10. The air pump is preferably electrically powered by the battery itself and is under the command of controller 44, linked thereto by a communication link 70. Air pump 68 draws ambient air in through a filter 71 and forces the air under pressure into an air conduit 72. Air conduit 72 is in fluid communication with each cell 14. A charging sensor 76 is also mounted in or on battery 10, the charging sensor being capable of generating a signal indicating that the battery is being charged, and communicating this signal to the controller, for example, over a communication link 80. Examples of various types of charging sensors are provided below.

In response to a signal from the charging sensor 76 indicating that battery 10 is being charged, the controller 44 switches air pump 68 on, and air is pumped through air conduit 72 and into each cell 14. For effective mixing of the electrolyte, branch air conduits 74 extend from air conduit 72 down to the lower regions of the cell 14, preferably level with the bottom of the plates 16. Air pumped into the cells 14 is thus forced to bubble up through the electrolyte, causing convection currents which mix the more concentrated acid layers which tend to form at the bottoms of the cells 14 with the less concentrated acid at the tops of the cells. This ensures that electrolyte mixing occurs between the regions of each cell having the highest acid concentration (the bottom) and the lowest (the top).

Signals from the charging sensor 76 are used by the controller 44, which preferably operates according to an algorithm to control the air mixing as follows. The controller 44 is powered by the battery 10, and is thus connected across a number of battery cells 14. The controller is thus subjected to the battery voltage fluctuations as it is discharged and charged. The controller 44 continuously monitors the voltage-per-cell of the battery 10 across the same leads that provide power to it. When charging begins, the voltage rises, and when the voltage exceeds a first predetermined value of volts per cell (e.g., 2.15 volts per cell), the controller determines that charging has commenced. The controller then switches the air pump 68 on and off at defined intervals according to the algorithm to provide maximum mixing of the electrolyte 18 within cells 14 with the fewest pump run hours. For example, an effective cycle is for the air pump 68 to run for 2 minutes during every 30 minutes of charging. Continuous running of the air pump 68 does not significantly improve the homogeneity of the electrolyte and has the disadvantage of greatly reducing the life of the air pump motors, particularly if these are small dc brush motors.

The flow of mixing air to the cells 14 continues at intervals as determined by the algorithm until the battery voltage reaches a second predetermined voltage (e.g., 2.35 volts per cell) higher than the first predetermined voltage that signaled charging initiation. From this second voltage level, the controller 44 determines that normal gassing and mixing has commenced within the cells 14 and that there in no further need for air mixing. However, the controller continues to operate the air pump 68 but only for short pulses at intervals. This action eliminates the possibility of lower density electrolyte left in the branch conduits 74 being forced upward into the conduit by differential pressure created by the increasing density electrolyte in each cell due to continued charging. A check valve located in each branch conduit 74 can serve the same purpose as can a single check valve in the main air conduit 72.

As a result of the charger shutting off, the battery voltage drops through a third predetermined value (e.g. 2.30 volts per cell) and again down further to a fourth predetermined value (e.g. 2.00 volts per cell) for a sufficient time period. From these voltage changes, and in accordance with the algorithm, the controller 44 determines that charging is complete. The controller 44 then switches pump 68 off. The controller 44 then resets and reverts to the status of continuously monitoring the voltage of the battery 10 to determine when the next charging cycle has commenced. This is a preferred algorithm but several other, similar algorithms are possible to control the air pumps.

Other embodiments of the charging sensor are also feasible. For example, the charging sensor 76 may be a limit switch that is mounted near a battery terminal 78 and senses, by contact with a charging cable or coupling, when the terminal 78 of battery 10 is connected to the charger. In response to contact with the coupling, the limit switch generates a signal that is communicated to the controller 44 over communication link 80, indicating charging. Alternately, sensor 76 may be a Hall Effect device which senses current flowing to the battery by the presence of the induced magnetic field surrounding the current. The Hall Effect device generates a signal in response to the magnetic field and communicates it to the controller to indicate charging of battery 10. A common shunt could also be used in the charging circuit whereby a voltage rise across the shunt is communicated to the controller indicating charging of the battery 10.

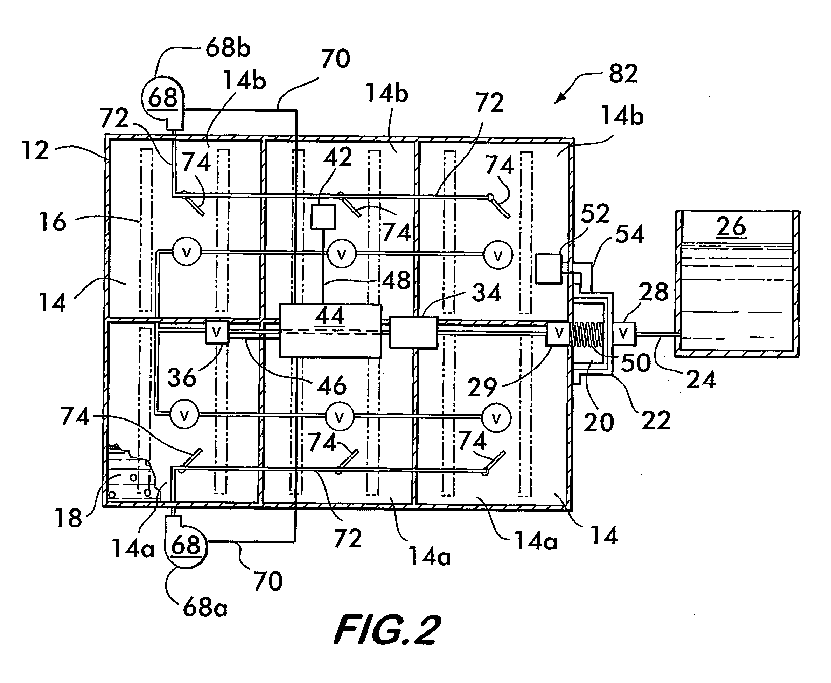

Figure 2 shows an alternate embodiment of a battery 82 having an air mixing system using more than one air pump 68. Multiple pumps 68 are mounted in or on the battery 10 and are under the command of controller 44 as described above. When using multiple air pumps, it is advantageous to split their duties between different groups of cells 14. Thus, one pump, 68a, pumps air into a group of cells 14a, while another pump, 68b, is dedicated to a group of cells 14b. When multiple pumps are used in this manner, the conduit runs are not as long, and the commensurate pressure drop throughout the conduits is smaller than if one long conduit connects all cells. This ensures more uniform air distribution to all cells, preventing air starvation and poor mixing in cells far from the pump. The division of labor among multiple pumps also allows smaller pumps to be used that are easier to integrate into the battery 82.

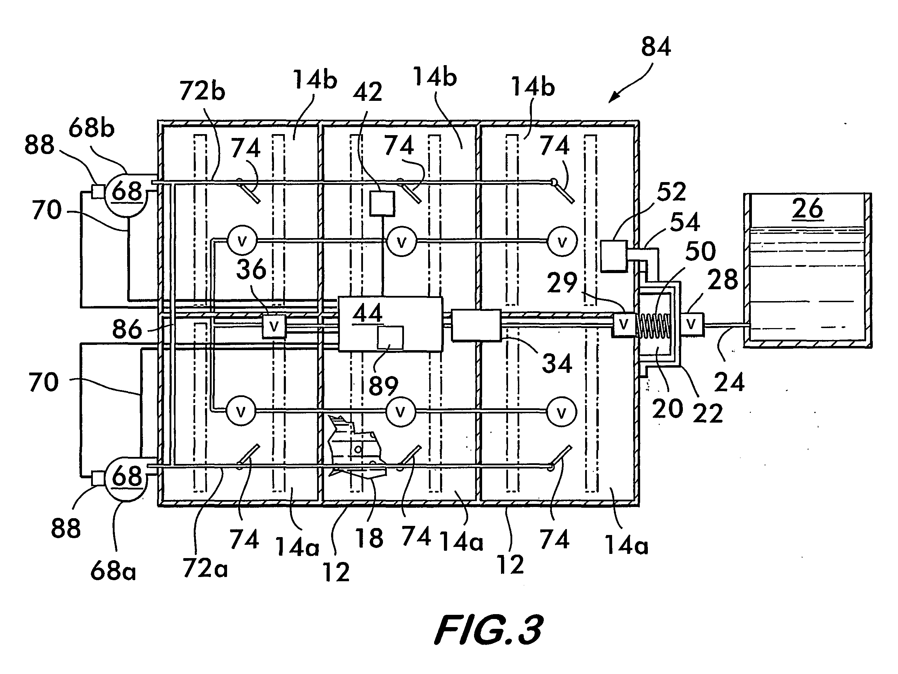

As illustrated in the battery 84 shown in, Figure 3, multiple pumps 68a and 68b may also be used to provide redundancy to the air mixing system by linking the air conduits 72a and 72b with a bridge conduit 86. In this manner, both pumps 68a and 68b supply air to both groups of cells 14a and 14b. Mixing will, thus, occur in both groups of cells during charging in the event that one of the pumps fails. In the event of an air pump failure, it is advantageous to have a pump failure sensor 88 in communication with the controller 44, the pump failure sensor generating a signal indicative of a non-operational pump that is received by the controller 44. Upon receipt of such a signal, the controller 44 may activate an alarm 89 to alert the technician of a pump failure. The pump failure sensor may detect pump failure in one of many different ways, for example, by sensing a voltage drop in the circuit supplying power to the air pumps. The alarm signal may also be effected in one of many ways, for example, an auditory alarm or a visual alarm such as a light on the battery which lights or fails to light when a pump is non-operational.

Further upon receipt of the pump failure signal the controller 44 may operate the remaining pump or pumps at a higher pressure or higher volume throughput, or longer duration to make up for the lack of pumping capacity occasioned by the failure of one or more pumps.

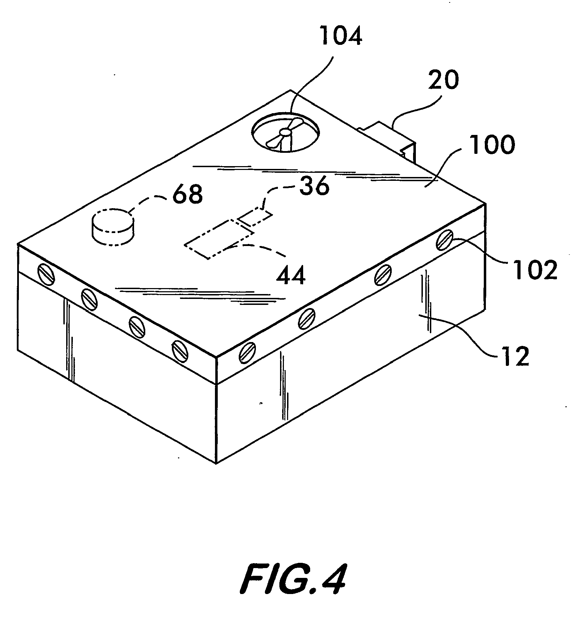

Preferably, all of the battery embodiments according to the invention include a ventilated cover 100 attached to casing 12 as shown in Figure 4. Cover 100 is preferably steel and is securely attached or otherwise locked to the battery using, for example, fasteners 102 to restrict access to the various system components such as the controller 44, the air pump or pumps 68 and the conduit valve 36 which are protected under the cover. The cover 100, thus, prevents damage to and tampering with the components. Steel is preferred to contain any hydrogen explosion that should occur, but the cover is properly vented to prevent hydrogen gas build-up and may thus have ventilation fans 104 run by explosion proof motors.

## Claims

1. An electric battery (10;82;84) having a plurality of aqueous electrolyte cells (14;14a,14b), said battery being connectable to a water source (26) for replenishing water in said cells, said battery comprising:
a water conduit (30) fixed to said battery and capable of being connected in fluid communication with said water source, said water conduit being in fluid communication with said cells;
a valve system (29,32,36,40) operatively associated with said water conduit for controlling water flow from said water source, through said water conduit and to said cells;
an electrolyte level sensor (42) capable of generating signals indicative of an amount of electrolyte (18) in at least one of said cells; and
a controller (44) attached to said battery and in communication with said electrolyte level sensor and said valve system, said controller controlling said valve system to allow water to flow to said cells in response to signals from said level sensor indicative of a deficient amount of electrolyte in said cells, and preventing water flow to said cells in response to signals from said level sensor indicative of a sufficient amount of electrolyte in said cells.

2. An electric battery (10;82;84) according to Claim 1, wherein said valve system comprises:
a conduit valve (36) positioned in said water conduit (30) to control water flow from said water source (26) to said cells (14;14a,14b), said conduit valve being in communication with and under the control of said controller (44) for opening and closing thereof;
a plurality of cell valves (40), one of said cell valves being positioned in each of said cells for controlling water flow from said water conduit to each of said cells.

3. An electric battery (10;82;84) according to Claim 2, wherein each of said cell valves (40) comprises a valve member responsive to a level of fluid in each said cell (14;14a,14b) to effect opening of said cell valve when said amount of fluid is less than a first predetermined amount, and closing of said cell valve when said amount of fluid is greater than a second predetermined amount.

4. An electric battery (10;82;84) according to Claim 1, wherein said water source (26) has a fitting (22) connectable to said water conduit (30) through a coupling (20) attached to said battery, said coupling comprising:
a biasing member (50) positioned between said coupling and said fitting for ejecting said fitting away from and out of engagement with said coupling; and
a latch (52) movable between a first position engaging and holding said fitting in engagement with said coupling against said biasing member, and a second position releasing said fitting from engagement with said coupling, said latch being actuated between said first and second positions by said controller (44).

5. An electric battery (10;82;84) according to Claim 1, further comprising a ventilated cover (100) positioned on said battery over said controller (44) and said valve system (29,32,36,40).

6. An electric battery (10;82;84) according to Claim 5, wherein said cover (100) is locked to said battery thereby restricting access to said controller (44) and said valve system (29,32,36,40).

7. An electric battery (10;82;84) according to Claim 1, further including:
a charging sensor (76) capable of generating a signal indicating when said battery is being charged, said charging sensor being in communication with said controller (44); and
an air pump (68;68a,68b) in fluid communication with said cells (14;14a,14b), said air pump being in communication with and controlled by said controller and pumping air into said cells to promote mixing of said fluid therein and thereby prevent acid stratification during charging.

8. An electric battery (10;82;84) according to Claim 7, further comprising an air conduit (72;72a,72b,86) fixed to said battery and extending to each of said cells (14;14a,14b), said air conduit providing fluid communication between said air pump (68;68a,68b) and said cells.

9. An electric battery (10;82;84) according to Claim 7, further comprising a ventilated cover (100) positioned on said battery over said controller (44), said valve system (29,32,36,40) and said air pump (68;68a,68b).

10. An electric battery (10;82;84) according to Claim 9, wherein said cover (100) is locked to said battery thereby restricting access to said controller (44), said valve system (29,32,36,40) and said air pump (68;68a,68b).

11. An electric battery (10;82;84) according to Claim 7, wherein said charging sensor (76) comprises a Hall Effect device mounted on said battery for measuring flow of electrical current to said battery indicative of charging.

12. An electric battery (10;82;84) according to Claim 7, wherein said charging sensor (76) comprises an electrical shunt device mounted on said battery for measuring flow of electrical current to said battery indicative of charging.

13. A method of replenishing water to aqueous electrolyte cells (14;14a,14b) of an electric battery (10;82;84) according to claim 1, said method comprising the steps of:
connecting said battery to a water source (26);
sensing when said electrolyte (18) in said battery is deficient using said electrolyte level sensor (42);
allowing water to flow from said water source to said cells through said conduit (30) fixed to said battery by opening said valve system (29,32,36,40) in response to signals from said electrolyte level sensor with said controller (44) which is attached to said battery and is in communication with said electrolyte level sensor and said valve system;
sensing when said electrolyte in said battery is sufficient using said electrolyte level sensor; and
halting flow of said water to said cells.

## Patentansprüche

1. Elektrische Batterie (10;82;84) mit einer Mehrzahl von Zellen (14;14a,14b) mit wässerigem Elektrolyt, wobei die Batterie mit einer Wasserquelle (26) verbindbar ist, um Wasser in den Zellen nachzufüllen, wobei die Batterie aufweist:
eine Wasserleitung (30), die an der Batterie befestigt ist und geeignet ist, in Fließverbindung mit der Wasserquelle verbunden zu werden, wobei die Wasserleitung in Fließverbindung mit den Zellen ist;
ein Ventilsystem (29,32,36,40), das betriebsmäßig mit der Wasserleitung verbunden ist, um Wasserfluss von der Wasserquelle, durch die Wasserleitung hindurch und zu den Zellen zu steuern;
ein Elektrolyt-Füllstandssensor (42), der geeignet ist, Signale zu erzeugen, welche eine Menge eines Elektrolyts (18) in zumindest einer der Zellen anzeigen; und
eine Steuereinrichtung (44), welche an der Batterie angebracht ist und in Verbindung mit dem Elektrolyt-Füllstandssensor und dem Ventilsystem ist, wobei die Steuereinrichtung das Ventilssystem steuert, um Wasser zu ermöglichen, zu den Zellen in Reaktion auf Signale von dem Füllstandssensor, die eine unzureichende Menge an Elektrolyt in den Zellen anzeigen, zu fließen, und um Wasserfluss zu den Zellen zu verhindern, in Reaktion auf Signale von dem Füllstandssensor, die eine ausreichende Menge an Elektrolyt in den Zellen anzeigen.

2. Elektrische Batterie (10;82;84) gemäß Anspruch 1, wobei das Ventilsystem aufweist:
ein Leitungsventil (36), das in der Wasserleitung (30) positioniert ist, um Wasserfluss von der Wasserquelle (26) zu den Zellen (14;14a,14b) zu steuern, wobei das Leitungsventil in Verbindung mit und unter der Steuerung der Steuereinrichtung (44) zum Öffnen und Schließen des Ventils ist;
eine Mehrzahl von Zellventilen (40), wobei eines der Zellventile in jeder der Zellen positioniert ist, um Wasserfluss von der Wasserleitung zu jeder der Zellen zu steuern.

3. Elektrische Batterie (10;82;84) gemäß Anspruch 2, wobei jedes der Zellventile (40) ein Ventilelement aufweist, welches auf einen Füllstand von Fluid in jeder Zelle (14;14a,14b) reagiert, um Öffnen des Zellventils, wenn die Menge an Fluid geringer ist als eine erste vorbestimmte Menge, und Schließen des Zellventils, wenn die Menge an Fluid größer ist als eine zweite vorbestimmte Menge, zu bewirken.

4. Elektrische Batterie (10;82;84) gemäß Anspruch 1, wobei die Wasserquelle (26) ein Anschlussstück (22) besitzt, welches mit der Wasserleitung (30) durch eine an der Batterie angebrachte Kupplung (20) verbindbar ist, wobei die Kupplung aufweist:
ein Vorspannungselement (50), welches zwischen der Kupplung und dem Anschlussstück positioniert ist, um das Anschlussstück von der Kupplung fort und aus dem Eingriff mit der Kupplung auszustoßen; und
eine Klinke (52), die bewegbar ist zwischen einer ersten Position, die eingreift und das Anschlussstück in Eingriff mit der Kupplung gegen das Vorspannungselement hält, und einer zweiten Position, die das Anschlussstück von dem Eingriff mit der Kupplung freigibt, wobei die Klinke zwischen der ersten und der zweiten Position durch die Steuereinrichtung (44) bewegt wird.

5. Elektrische Batterie (10;82;84) gemäß Anspruch 1, die ferner eine belüftete Abdeckung (100) aufweist, welche an der Batterie über der Steuereinrichtung (44) und dem Ventilsystem (29,32,36,40) positioniert ist.

6. Elektrische Batterie (10;82;84) gemäß Anspruch 5, wobei die Abdeckung (100) mit einem Verschluss an der Batterie angebracht ist, wodurch Zugang zu der Steuereinrichtung (44) und dem Ventilsystem (29,32,36,40) eingeschränkt ist.

7. Elektrische Batterie (10;82;84) gemäß Anspruch 1, die ferner aufweist:
einen Ladesensor (76), der geeignet ist, ein Signal zu erzeugen, das anzeigt, wenn die Batterie geladen wird, wobei der Ladesensor in Verbindung mit der Steuereinrichtung (44) ist; und
eine Luftpumpe (68;68a,68b), die in Fließverbindung mit den Zellen (14;14a,14b) ist, wobei die Luftpumpe in Verbindung mit der Steuereinrichtung ist und durch sie gesteuert wird und Luft in die Zellen pumpt, um ein Mischen des Fluids darin zu fördern und **dadurch** Säure-Schichtenbildung während des Ladens zu verhindern.

8. Elektrische Batterie (10;82;84) gemäß Anspruch 7, die ferner eine Luftleitung (72;72a,72b,86) aufweist, welche an der Batterie befestigt ist und sich zu jeder der Zellen (14;14a,14b) erstreckt, wobei die Luftleitung eine Fließverbindung zwischen der Luftpumpe (68;68a,68b) und den Zellen bildet.

9. Elektrische Batterie (10;82;84) gemäß Anspruch 7, die ferner eine belüftete Abdeckung (100) aufweist, welche an der Batterie über der Steuereinrichtung (44), dem Ventilsystem (29,32,36,40) und der Luftpumpe (68;68a,68b) positioniert ist.

10. Elektrische Batterie (10;82;84) gemäß Anspruch 9, wobei die Abdeckung (100) mit einem Verschluss an der Batterie angebracht ist, wodurch Zugang zu der Steuereinrichtung (44), dem Ventilsystem (29,32,36,40) und der Luftpumpe (68;68a,68b) eingeschränkt ist.

11. Elektrische Batterie (10;82;84) gemäß Anspruch 7, wobei der Ladesensor (76) eine Hall-Effekt-Vorrichtung aufweist, die an der Batterie zum Messen des Fließens von elektrischem Strom zu der Batterie, welcher ein Laden anzeigt, befestigt ist.

12. Elektrische Batterie (10;82;84) gemäß Anspruch 7, wobei der Ladesensor (76) eine elektrische Shunt-Vorrichtung aufweist, die an der Batterie zum Messen des Fließens von elektrischem Strom zu der Batterie, welcher ein Laden anzeigt, befestigt ist.

13. Verfahren zum Nachfüllen von Wasser in wässerigen Elektrolyt enthaltende Zellen (14;14a,14b) einer elektrischen Batterie (10;82;84) gemäß Anspruch 1, wobei das Verfahren die Schritte aufweist:
Verbinden der Batterie mit einer Wasserquelle (26);
Fühlen, wenn der Elektrolyt (18) in der Batterie unzureichend ist, unter Verwendung des Elektrolyt-Füllstandssensors (42);
Wasser ermöglichen, von der Wasserquelle zu den Zellen durch die an der Batterie befestigte Leitung (30) hindurch zu fließen, indem das Ventilsystem (29,32,36,40) in Reaktion auf Signale von dem Elektrolyt-Füllstandssensor mit der Steuereinrichtung (44) geöffnet wird, welche an der Batterie angebracht und in Verbindung mit dem Elektrolyt-Füllstandssensor und dem Ventilsystem ist;
Fühlen, wenn der Elektrolyt in der Batterie ausreichend ist, unter Verwendung des Elektrolyt-Füllstandssensors; und
Stoppen des Flusses des Wassers zu den Zellen.

## Revendications

1. Batterie électrique (10 ; 82 ; 84) ayant une pluralité de cellules électrolytiques aqueuses (14 ; 14a ; 14b), ladite batterie pouvant être raccordée à une source d'eau (26) pour remplir lesdites cellules d'eau, ladite batterie comprenant :
une conduite d'eau (30) fixée à ladite batterie et pouvant être raccordée en communication de fluide à ladite source d'eau, ladite conduite d'eau étant en communication de fluide avec lesdites cellules ;
un système de soupape (29, 32, 36, 40) associé de manière opérationnelle à ladite conduite d'eau pour contrôler l'écoulement d'eau depuis ladite source d'eau, à travers ladite conduite d'eau et jusqu'auxdites cellules ;
un capteur de niveau d'électrolyte (42) capable de générer des signaux indiquant une quantité d'électrolyte (18) dans au moins l'une desdites cellules ; et
un contrôleur (44) fixé à ladite batterie et en communication avec ledit capteur de niveau d'électrolyte et ledit système de soupape, ledit contrôleur contrôlant ledit système de soupape pour permettre à l'eau de s'écouler vers lesdites cellules en réponse aux signaux du capteur de niveau d'électrolyte indiquant une quantité déficiente d'électrolyte dans lesdites cellules, et empêchant l'eau de s'écouler vers lesdites cellules en réponse aux signaux provenant dudit capteur de niveau indiquant une quantité suffisante d'électrolyte dans lesdites cellules.

2. Batterie électrique (10 ; 82 ; 84) selon la revendication 1, dans laquelle ledit système de soupape comprend :
une soupape de conduite (36) positionnée dans ladite conduite d'eau (30) pour contrôler l'écoulement d'eau depuis ladite source d'eau (26) vers lesdites cellules (14 ; 14a ; 14b), ladite soupape de conduite étant en communication avec et sous le contrôle dudit contrôleur (44) pour l'ouverture et la fermeture de celle-ci ;
une pluralité de soupapes de cellules (40), l'une desdites soupapes de cellules étant positionnée dans chacune desdites cellules pour contrôler l'écoulement d'eau depuis ladite conduite d'eau vers chacune desdites cellules.

3. Batterie électrique (10 ; 82 ; 84) selon la revendication 2, dans laquelle chacune desdites soupapes de cellules (40) comprend un élément de soupape sensible à un niveau de fluide dans chacune desdites cellules (14 ; 14a ; 14b) pour entraîner l'ouverture de ladite soupape de cellule lorsque ladite quantité de fluide est inférieure à une première quantité prédéterminée, et la fermeture de ladite soupape de cellule lorsque ladite quantité de fluide est supérieure à une deuxième quantité prédéterminée.

4. Batterie électrique (10 ; 82 ; 84) selon la revendication 1, dans laquelle ladite source d'eau (26) a un raccord (22) pouvant être raccordé à ladite conduite d'eau (30) à travers un couplage (20) fixé à ladite batterie, ledit couplage comprenant :
un élément de sollicitation (50) positionné entre ledit couplage et ledit raccord pour éjecter ledit raccord à distance dudit couplage et le désengager de ce dernier ; et
un verrouillage (52) mobile entre une première position engageant et maintenant ledit raccord en engagement avec ledit couplage contre ledit élément de sollicitation, et une deuxième position libérant ledit raccord de son engagement avec ledit couplage, ledit verrouillage étant actionné entre lesdites première et deuxième positions par ledit contrôleur (44).

5. Batterie électrique (10 ; 82 ; 84) selon la revendication 1, comprenant en outre un couvercle ventilé (100) positionné sur ladite batterie sur ledit contrôleur (44) et ledit système de soupape (29, 32, 36, 40).

6. Batterie électrique (10 ; 82 ; 84) selon la revendication 5, dans laquelle ledit couvercle (100) est bloqué sur ladite batterie, limitant ainsi l'accès audit contrôleur (44) et audit système de soupape (29, 32, 36, 40).

7. Batterie électrique (10 ; 82 ; 84) selon la revendication 1, comprenant en outre :
un capteur de chargement (76) capable de générer un signal indiquant le moment où ladite batterie est chargée, ledit capteur de chargement étant en communication avec ledit contrôleur (44) ; et
une pompe à air (68 ; 68a ; 68b) en communication de fluide avec lesdites cellules (14 ; 14a ; 14b), ladite pompe à air étant en communication avec et contrôlée par ledit contrôleur et pompant de l'air dans lesdites cellules pour favoriser le mélange dudit fluide à l'intérieur et ainsi empêcher la stratification d'acide pendant le chargement.

8. Batterie électrique (10 ; 82 ; 84) selon la revendication 7, comprenant en outre une conduite d'air (72 ; 72a, 72b, 86) fixée à ladite batterie et s'étendant vers chacune desdites cellules (14 ; 14a ; 14b), ladite conduite d'air fournissant une communication de fluide entre ladite pompe à air (68 ; 68a ; 68b) et lesdites cellules.

9. Batterie électrique (10 ; 82 ; 84) selon la revendication 7, comprenant en outre un couvercle ventilé (100) positionné sur ladite batterie sur ledit contrôleur (44), ledit système de soupape (29, 32, 36, 40) et ladite pompe à air (68 ; 68a ; 68b).

10. Batterie électrique (10 ; 82 ; 84) selon la revendication 9, dans laquelle ledit couvercle (100) est bloqué sur ladite batterie limitant ainsi l'accès audit contrôleur (44), audit système de soupape (29, 32, 36, 40) et à ladite pompe à air (68 ; 68a ; 68b).

11. Batterie électrique (10 ; 82 ; 84) selon la revendication 7, dans laquelle ledit capteur de chargement (76) comprend un dispositif à effet Hall monté sur ladite batterie pour mesurer l'écoulement de courant électrique vers ladite batterie indiquant le chargement.

12. Batterie électrique (10 ; 82 ; 84) selon la revendication 7, dans laquelle ledit capteur de chargement (76) comprend un dispositif shunt électrique monté sur ladite batterie pour mesurer l'écoulement de courant électrique vers ladite batterie indiquant le chargement.

13. Procédé de remplissage de cellules électrolytiques aqueuses (14 ; 14a ; 14b) d'une batterie électrique (10 ; 82 ; 84) avec de l'eau selon la revendication 1, ledit procédé comprenant les étapes consistant à:
raccorder ladite batterie à une source d'eau (26);
détecter le moment où ledit électrolyte (18) dans ladite batterie est déficient, à l'aide dudit capteur de niveau d'électrolyte (42) ;
permettre à l'eau de s'écouler depuis ladite source d'eau vers lesdites cellules à travers ladite conduite (30) fixée à ladite batterie en ouvrant ledit système de soupape (29, 32, 36, 40) en réponse aux signaux provenant dudit capteur de niveau d'électrolyte avec ledit contrôleur (44) qui est fixé à ladite batterie et est en communication avec ledit capteur de niveau d'électrolyte et ledit système de soupape ;
détecter le moment où ledit électrolyte dans ladite batterie est suffisant à l'aide dudit capteur de niveau d'électrolyte ; et
interrompre l'écoulement de ladite eau vers lesdites cellules.
